# EUROPEAN PATENT SPECIFICATION

(11) **EP 0 255 442 B1**
(45) Date of publication and mention of the grant of the patent: **20.10.1993**
(21) Application number: 87401766.8
(22) Date of filing: 29.07.1987
(51) Int. Cl.: H04L 12/28

(54) **Circuit device for implementing the access protocol for serial exchange of numerical informations among terminals interconnected by an optical fiber star network**
Schaltungsanordnung zur Ausführung des Zugriffsprotokolls zum seriellen Austausch von Informationen zwischen durch ein fiberoptisches Sternnetz verbundenen Endgeräten
Circuit pour la mise en oeuvre d'un protocole d'accès pour l'échange en série d'informations numériques entre terminaux interconnectés au moyen d'un réseau à fibres optiques en étoile

(30) Priority: 30.07.1986 IT 2131086
(43) Date of publication of application: 03.02.1988
(73) Proprietor: ALCATEL ITALIA S.p.A., 20149 Milano (IT); ALCATEL N.V., NL-1077 XX Amsterdam (NL)
(72) Inventor: Valeri, Marco, Rome (IT); Rocchini, Carlo Alberto, Rome (IT)
(74) Representative: Pothet, Jean Rémy Emile Ludovic

(56) References cited:
- EP-A- 0 131 662
- EP-A- 0 185 122
- PATENT ABSTRACTS OF JAPAN, vol. 9, no. 318, page E-366, December 1985 & JP-A-60 152 143
- JOURNAL OF LIGHTWAVE TECHNOLOGY, vol. LT-3, no. 3, June 1985, pages 426-431, IEEE, New York, US; S.D. PERSONICK: "Protocols for fiber-optic local area networks"
- IEEE TRANSACTIONS ON COMPUTERS, vol. C-32, no. 8, August 1983, pages 760-763, IEEE, New York, US; W. BUX: "Analysis of a local-area bus system with controlled access"

## Description

The present invention relates to a circuit device for implementing the access protocol for serial exchange of numerical informations among terminals interconnected by an optical fiber star network, preferably usable in Local Area Networks (LAN) for voice and data transmission.

As it is known, optical telecommunications utilize optical guides, called optical fibers because of their structure which, by connecting a plurality of user terminals, can establish a network whatever complicated.

If all network terminals are connected to a sole central node, the network is called star network.

The central node can be either active (signal repeater or switching network) or passive (optical signal coupler). In both cases, terminals can exchange each other numerical informations, namely code pulse sequence coded informations, in serial form. That means that pulses of any sequence are subsequently transmitted one after the other in packets, observing a certain access protocol.

The desired requirements of an access protocol to network by terminals real-time operating are:
a) efficiency independent of transmission speed of code pulse packets;
b) efficiency independent of both static transmission characteristics of users and traffic distribution provided by said users;
c) distribution of packet transmission delay over a small value range;
d) ability to accept different distributions of such delay for different user classes;
e) structure enabled to communication with other networks.

In the current art, in order to meet such requirements, access protocols based on possible conflict prevention techniques are used in optical fiber star networks.

A first typical example is the CSMA-CD (Carrier Sense Multiple Access with Collision Detection) technique.

With this technique, a terminal sends a message immediately after having ascertained that the channel is clear. To this end, the received signal level is continuously monitored in order to detect even possible collisions among messages which have been transmitted simultaneously, since, if this is the case,the received signal level is changed. After having detected a collision, the involved terminals do not transmit anylonger and, if the channel is clear, they retransmit, for example, only after a period having a random duration, or in other ways.

With an access of this type, a great efficiency is achieved if transmission intervals, and then the code pulse packets, are long and if signal propagation time among terminal pairs of the same network (propagation delay) is short.

This is disadvantageous for high transmission speeds as, with these latters increasing, the packet transmission time becomes shorter and shorter with respect to signal propagation time into the network. A second example of a conflict prevention technique for access protocols allows to overcome this latter difficulty. With this technique a queuing state transmission is used, so that each terminal can recognize the position of all network users in a delay queuing. This allows the automatic allocation of message transmission times, ensuring channel utilization efficiency, which is independent of distribution and traffic characteristics. This solution is illustrated inter alia, by documents JP-A-60 152 143 and US-A-4,631,718.

This solution, however, has the following drawbacks:
- it requires a queuing state transmission protocol on which the disadvantages to be eliminated are reproduced;
- the queuing state transmission involves a transmission capacity wasting due to the effect of propagation time.

Another prior publication of interest is the paper "Analysis of a local-area bus system with controlled access", by W. Buse, in IEEE Transactions on Computers Vol. C-32, No. 8, August 1983, pages 760-763, and patent documents JP-A-59 007 344, US-A-4,631,718 and EP-0 131 662. Nothing is provided to determine, automatically, the distance to the star center of each station hence, for each of them the appropriate time to transmit in an interrupted transmission sequence.

The object of the present invention is to overcome the above-mentioned drawbacks as regards circuits nowadays in use, by carrying out and providing a circuit for implementing the access protocol for serial exchange of numerical informations among terminals interconnected by an optical fiber star network, which allows the serial exchange of information among terminals in an manner which is entirely asynchronous and independent of transmission speed, of transmission delay distribution and of traffic and transmission characteristics distribution.

This and other objects, which will be better understood from the following description, are met by a circuit device for implementing the access protocol for serial exchange of numerical information among terminals interconnected by an optical fiber star network, characterized in that it includes a microcomputer, provided with a Random Access Memory to store queuing states and messages, as well as with a Read Only Memory, for physical addresses of all terminals, which microcomputer controls, at the beginning, a distance meter for measuring the distance from star center of each terminal, by activating its oscillators, beginning from the nearest to the center and then enables a delay state counter, whose end-of-counting pulse switches a flip-flop which, in turn, enables timings of an 8-bit counter, of a parallel/series converter shift register and of an encoder from NRZ to Manchester-code for transmission, which is interrupted by switching over, in a reset state, said flip-flop after having the 8-bit counter effected the end-of-counting, this latter timing the counter of queuing state sequences, whose outputs address the buffer RAM to store queuing states which, being read by the microcomputer, are transferred by this latter to its bus memories, setting the entire circuit for a new transmission-reception cycle.

Further characteristics and advantages of the present invention will become more apparent from the following detailed description of a preferred but not exclusive embodiment, with reference to the accompanying drawings, in which:
figure 1 shows the steps of terminal access to the network,
figure 2 shows a general diagram of an embodiment of a serial access circuit to an optical fiber star network according to the present invention.

The description mainly refers to queuing state reception and transmission, which represent the most important aspect of circuit operation; the transmission and reception of real information messages, is more briefly described without this involving limitation, being the transmission pattern the same, which requires in addition, only a memory extent binded to different format of code pulse packets of information messages.

Besides, even though it is possible to have the circuit according to the present invention with the highest use flexibility as to number of terminals, optical cable lenght, data packet format, transmission speed, the following description relates to, as merely indicative and not limitative example, an optical star network which interconnects 64 terminals at the most, which transfer messages at 140 Mbit/sec, with coding for 5-bit queuing states.

Before examining further circuit details, it becomes necessary to make some remarks.

In a star network the sole resource common to all terminals is star center: this resource is to be used in time-division in case of a numerical transmission with light of a given wavelenght on optical fibers star-interconnected through a sole center node.

Therefore, when a message sent by a terminal is passed through star center, this one, and thus the network, is unavailable for switching another message.
Then the queuing delay management can be made in a simple and automatic manner if each terminal knows its own distance from star center and thus the delay time from and to star center. This object can be reached by providing each terminal with a control circuit for entering the network according to the following formalities.

During the inizialization phase, each terminal measures its distance from star center by transmitting a suitable signal. In order to avoid collisions, and thus an incorrect measure, each terminal transmits in sequence according to its own physical address.

Once the time in which transmitted signals from each terminal reach the star center has been determined, it is possible to establish a transmission sequence of queuing states so that, when synchronization is effected, terminals transmit queuing states in order that their flow is uninterrupted.

Likewise, a terminal which has to transmit an information packet starts its transmission with a suitable ahead of time, so as to minimize the time interval of the transit through star center between consecutive packets of informations.

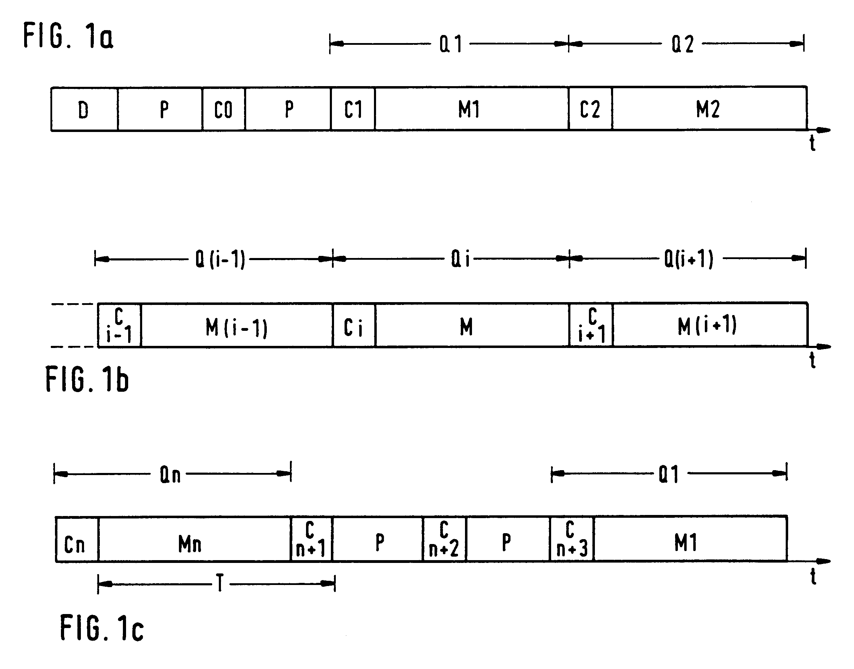

Access of terminals to network is illustrated in fig. 1.

During inizialization phase (fig.1a), signals on network are the following:
- first, measuring signals of distances (interval D) are sent;
- after having each terminal performed a distance measurement, one of the terminals, for istance the closest to star center, transmits a driver message P in order to synchronize queuing state transmission from all terminals:
- the terminals then transmit respective queuing states in time-division, during interval CO;
- the terminal closest to star center transmits a driver message once again, in order to give the circuit of queuing algorithm time to decide the trasmission queuing and keep the synchronism;
- a second sequence of queuing states is then in time-division, transmitted, during time interval C1;
- at this point, during time interval M1, a time-division transmission of code pulse packet of information messages, is started by terminals, according to a transmission sequence determined from queuing state sequence, which is received during interval CO.
- a sequence of queuing states C2 as well as the code pulse packet serie of information messages, is then transmitted according to a transmission order determined from a queuing state sequence received during interval C1, and so on.

When the initialization phase is ended, frame sequences Qi follow on the network, all of them formed by a sequence transmission of queuing states, during time interval Ci , and by a code pulse packet series of information messages, during time interval Mi (fig. 1b).

The queuing state sequence of all terminals is updated at each frame Qi and the queuing algorithm circuit decides the transmission queuing of terminals in Qi, according to a code state sequence, which is received in a previous frame Q (i-1).

Within a time interval Ci a queuing state sequence is time-division transmitted for all network terminals. If a terminal is not active, it is also assigned a time channel in Ci. This allows to facilitate both the terminal access not still active and a growth of the system. To this end, when a new terminal is connected to the network, or when a terminal is shifted, changing its distance from star center, the present phase take place again with a measurement of distances between terminals and star center. Distance values are stored in a nonvolatile storage of microcomputer of each terminal. Therefore, if a terminal is activated when other terminals are already active, it can already transmit its own queuing state into temporal channel, which is assigned to it in Ci, and synchronize its own oscillator on received signals, after the end of queuing state sequences transmission, enabling a transmission from a subsequent frame Q (i + 1).

For each terminal, the queuing state code contains information on type of message to be transmitted and on its priority. Terminals transmit in an order settled by a queuing algorithm circuit according to such information , in a fully asynchronous manner, then the same terminal may also take up several time channels of transmission interval of informations Mi of the same frame Qi.

In any case, in order to ensure a separation among subsequent information packets, adjacent time channels are divided by a time interval having a period of a least three code pulses. Information packets are switched among terminals, ensuring the best allocation of transmission delay related to the transmitted signal type. To this end, at each frame, priorities are updated according to queuing state sequence, taking in account delay times of transmission shift.

If, after a transmission cycle, no messages are to be transmitted, the terminal, which has transmitted last, sends a driver message, in order to allow a maintenance of synchronization and a commencement of another transmission cycle, as in the initialization phase (fig. 1c).

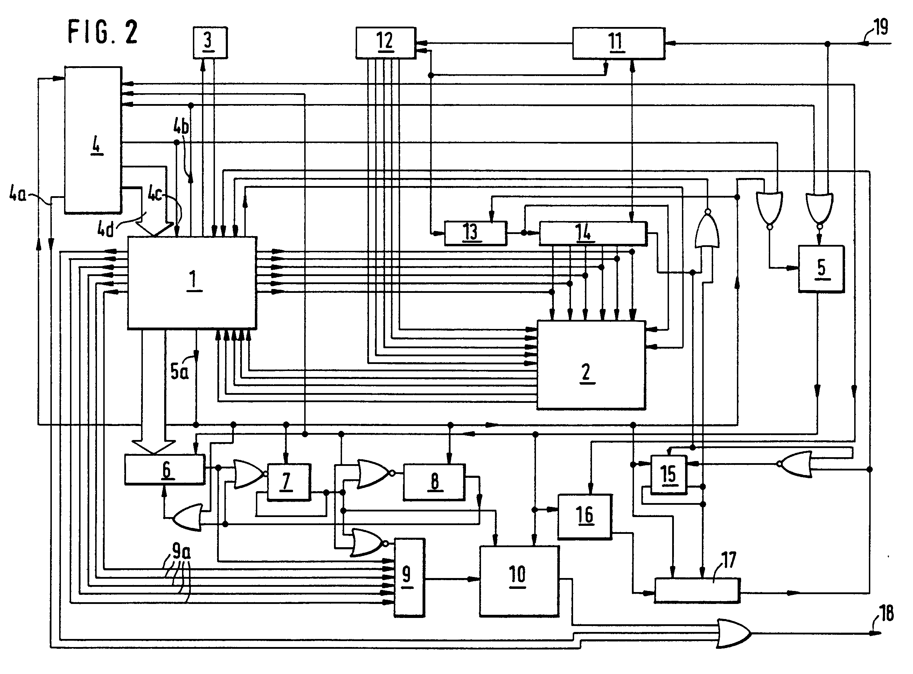

As it can be seen from fig. 2, transmission and reception are controlled by a microcomputer 1, which processes distance measurement, queuing states and controls and synchronizes the various phases of circuit operation.

Most of logic circuitry out of microcomputer works at high speed (140 Mbit/sec) and therefore an interface between microcomputer and outside logic, formed by a random access memory (RAM)2 for storing queuing states and messages is necessary.

The circuit includes a read only memory (ROM)3, in which all physical address of all terminals are stored. In the inizialization phase, a microcomputer 1 controls, when involved, the measuring of distance between star center and telemetering circuit 4, according to a sequence determined by sequence of physical terminal addresses, which is included in ROM 3.

When distance measuring is terminated, each terminal transmits its value to all other terminals. The terminal included among those active, which is the closest to star centre, enables its own oscillator 5 and sends a driver message 4a to all other terminals, synchronizing their oscillators 5, generating clock signal at 140 Mbit/sec. At the same time, the microcomputer sets on a certain initial value, depending on the distance between terminal and star centre, the counter 6, the counting time of which establishes the time delay in that terminal between the beginning of the reception of the driver message and the beginning of the transmission of its own queuing state. The latter consists of 5 code-bits (9a) originating from the microcomputer, containing information about the type of packets and its transmission priority.

The end-of-counting pulse of delay state counter 6 switches the flip-flop 7, which enables timings of a bit counter 8, a parallel-series converter shift register 9, and an encoder 10 from NRZ to Manchester-code. By means of these circuits, queuing state bits, received from register 9, are counted, serialized and coded to Manchester-code for transmission.

The end-of-counting pulse of the bit counter 8 indicates that the queuing state has been transmitted and switches the flip-flop, previously driven, into rest state, disconnecting transmission circuits.

Distance measuring operation during the inizialization phase is effected by the distance counter 4 which, after an enabling counting signal 4b, receives a timing signal syncronized with the transmission clock signal at 140 Mbit/sec, with which it can measure the appearance delay of signal echo transmitted by terminal itself sent back from star center, counting the number of clock signal periods, which correspond to this delay.

At 140 Mbit/sec, this period amounts to 7 nsec and if, for example, the propagation delay, corresponding to the maximum terminal-node distance, is 5000 nsec, periods to be counted are 5000/7=714 and, thus, in this case, it is sufficient to use a counter module 1024. The first positive edge of echo signal received by distance counter 4 stops counting and causes the sending of an end counting signal 4c from circuit 4 to microcomputer, which thus can fetch the distance measuring code 4d.

This measure has an accuracy that is roughly equal to one period of the clock signal: thus, it is necessary to space the queuing state transmission of terminals at least three code pulses, in order to avoid possible overlaps.

The receiving circuit of queuing states is the same employed for receiving messages and, thus, is dimensioned according to packet format of code pulses forming the messages; in the following, a reception and abstract of queuing states, is described according to the present invention.

During the initialization phase, the microcomputer of each terminal, when transmission of its own signal for the distance measurement is ended (within time interval D of fig. 1a), sends the circuit a reset signal 5a enabling it for receiving the driver message 4a, transmitted by the active terminal which is the star center's nearest one,a message which enables the synchronization of the clock signal generator oscillator 5 at 140 Mbit/sec with the homologous oscillators of all other terminals.

At this point, each terminal receives the first sequence CO of queuing states from all terminals and for a second time the driver message 4a from the active terminal which is the star center's nearest one, during the duration of which the queuing algorithm is processed through the microcomputer.

The acquisition of queuing states takes place as follows: the code pulses of each queuing state, which are being received, are decoded from manchester-to NRZ-code into the decoder 11 and feeded to a shift series-parallel converter register 12 and simultaneously transmitted to the code pulse counter 13 which, every 5 pulses, sends an end-counting pulse which synchronizes the counter 14 of queuing state sequences, whose outputs address the RAM 2 for storing queuing states (from 5 bits each and relevants to no more than 64 terminals in the illustrated merely indicative and not limitative example).

Once all of queuing states have been stored into RAM2, the counter of queuing state sequences 14 sends an end-of-counting pulse which, received by microcomputer, enables a reading operation of RAM 2 and the transfer of queuing states into its bus memories.

The same end-of-counting pulse of counter 14 triggers the flip-flop 15, the output of which:
- transmits the signal of end-of-queuing state sequences to microcomputer which, when is the duty of terminal to which it belongs, can enable the message transmission;
- enables the passage at the output of signal from control circuit 16 which monitors the message lenght timing the counter of message number 17, whose end-of-counting pulse is the end-of-messages pulse transmitted to microcomputer, which sets the entire circuit for a new transmission 18 and reception 19 cycle.

In this way, the present invention reaches the proposed objects. In fact, by means of such a circuit it is possible to obtain an operation which permits an asynchronous information exchange among terminals of a star network apart from transmission parameters.

Obviously, several changes and variants concerning both the structure and the program can be made in the device, according to the present invention, without being out of the sphere of the inventive concept, the extent of the protection being determined by the terms of the claims.

## Claims

1. Circuit device for implementing an access protocol for serial exchange of digital information among terminals interconnected by a star network, each terminal comprising a microcomputer (1) providing an own queuing state and a message to be transmitted to the star network, sending means (9, 10) for transmitting said own queuing state and said message to the star network, receiving means (11, 12) providing information received from the star network, a first memory (2) to store received information including received queuing states and messages, said microcomputer (1) reading queuing states in said first memory (2) and initiating the transmission of a message to the star network according to said received queuing states and said microcomputer (1) sending said own queuing state at a proper time to said star network, characterized in that this circuit device also includes a second memory (3) to store the addresses of all the terminals, distance measuring means (4) operating in accordance with the contents of said second memory (3) and measuring the distance between the terminal and the center of the star network, own queuing state transmission delay means (6) responsive to said measured distance to determine a time delay extending from the reception of driving a message to the transmission of said own queuing state, thus initiating such transmission so that said own queuing state is sent within an uninterrupted sequence of queuing states of all the terminals.

2. Circuit device according to claim 1, characterized in that said distance measuring mean includes a counter (4) counting clock pulses from the transmission of a distance measuring signal to the star network center to the reception of the same message sent back to all terminals by the star center.

3. Circuit device according to claim 2, characterized in that each terminal send a distance measuring signal in an initialization phase; in a sequence determined by the addresses of the terminals as stored into said second memory (3).

4. Circuit device in accordance with claim 1 for implementing an access protocol for serial exchange of numerical informations among terminals interconnected by an optical fiber star network, characterized in that it includes a microcomputer, provided with a random access memory (RAM) (2) to store queuing states and messages, as well as with a read only memory (ROM) (3) for physical addresses of all terminals, which microcomputers controls, at the beginning, a distance meter (4) for measuring the distance from star center of each terminal, by activating its oscillators, beginning from the nearest to the center and then enables a delay state counter (6), whose end-of-counting pulse switches a flip-flop (7) which, in turn, enables timings of an 8-bit counter, of a parallel-series converter shift register (9) and of an encoder from NRZ to Manchester-code (10) for transmission, which is interrupted by switching over, in a reset state, said flip-flop (7) after having the 8-bit computer effected the end-of-counting, this latter timing the counter of queuing state sequence, whose outputs address the buffer RAM to store queuing states which, being read by the microcomputer, are transferred by this latter to its bus memories, setting the entire circuit for a new transmission-reception cycle.

5. Circuit device according to any one of claims 1 to 4, characterized in that instead of a microcomputer it is used a wired logic sequential circuit.

6. Circuit device according to claim 5, characterized in that said microcomputer has an algorithm in order to control the queuing states for the access to the network.

7. Circuit device according to claim 6, characterized in that said algorithm allows the eventual connection of each terminal to other optical fiber star networks.

## Patentansprüche

1. Schaltungsanordnung zur Ausführung des Zugriffsprotokolls zum seriellen Austausch von digitalen Informationen zwischen durch ein faseroptisches Sternnetz verbundenen Endgeräten, wobei jedes Endgerät einen Mikrocomputer (1) aufweist, der einen eigenen Warteschlangenstatus und eine an das Sternnetz zu übermittelnde Nachricht, weiter Sendemittel mittel (9, 10) vorsieht für die Ubertragung des genannten eigenen Warteschlangenstatus und die genannte Nachricht zum Sternnetz, Empfangsmittel (11, 12), welche vom Sternnetz empfangene Information vorsehen, einen ersten Speicher (2) zur Speicherung von empfangener Information, welche empfangene Warteschlangenzustände und Nachrichten umfasst, wobei der genannte Mikrocomputer (1) Warteschlangenzustände im genannten ersten Speicher (2) liest und die Uebertragung einer Nachricht zum Sternnetz gemäss den genannten empfangenen Warteschlangenzuständen einleitet und der genannte Mikrocomputer (1) seinen eigenen Warteschlangenstatus zu geeigneter Zeit an das genannte Sternnetz sendet, dadurch gekennzeichnet, dass die Schaltungsanordnung auch einen zweiten Speicher (3) aufweist, um die Adressen aller Endgeräte zu speichern, weiter Distanzmessmittel (4), welche in Uebereinstimmung mit dem Inhalt des genannten zweiten Speichers (3) arbeiten und die Distanz zwischen dem Endgerät und dem Zentrum des Sternnetzes messen, weiter eigene Warteschlangenstatus-Uebertragungsverzögerungsmittel (6), welche auf die genannte gemessene Distanz ansprechen, um eine Zeitverzögerung zu bestimmen, die sich vom Empfang einer Treibernachricht bis zur Uebertragung des genannten eigenen Warteschlangenstatus erstreckt, also ein solche Uebertragung so einleiten, dass der genannte eigene Warteschlangenstatus innerhalb einer ununterbrochenen Folge von Warteschlangenzuständen aller Endgeräte gesendet wird.

2. Schaltungsanordnung gemäss Anspruch 1, dadurch gekennzeichnet, dass die genannten Distanzmessmittel einen Zähler (4) aufweisen, welcher Taktimpulse von der Uebertragung eines Distanzmesssignales zum Sternnetzzentrum zählt bis zum Empfang derselben Nachricht, welche durch das Sternnetzzentrum an alle Endgeräte zurückgesendet wird.

3. Schaltungsanordnung gemäss Anspruch 2, dadurch gekennzeichnet, dass jedes Endgerät in einer Startphase ein Distanzmessignal sendet in einer Folge, die bestimmt ist durch die Adressen der Endgeräte, wie sie im genannten zweiten Speicher (3) gespeichert sind.

4. Schaltungsanordnung gemäss Anspruch 1 zur Ausführung des Zugriffsprotokolls zum seriellen Austausch von digitalen Informationen zwischen durch ein faseroptisches Sternnetz verbundenen Endgeräten, dadurch gekennzeichnet, dass sie einen Mikrocomputer aufweist, der mit einem Schreib/Lese-Speicher mit wahlfreiem Zugriff (RAM) (2) versehen ist, um Warteschlangenzustände und Nachrichten zu speichern, sowie mit einem Festwertspeicher (ROM) (3) für die physikalischen Adressen aller Endgeräte, welche Mikrocomputer am Anfang einen Distanzmesser (4) steuern, um die Distanz jedes Endgerätes vom Sternnetzzentrum zu messen, indem deren Oszillatoren aktiviert werden, beginnend mit dem nächsten zum Zentrum, und dann einen Verzögerungszustandszähler (6) freigeben, dessen Zählendeimpuls ein Flip-Flop (7) schaltet, welches seinerseits die Taktsignale für einen 8-Bit-Zähler, für ein Parallel/Seriewandler-Schieberegister (9) und für einen Coder vom NRZ-Code zum Manchester-Code für die Uebertragung freigibt, welcher unterbrochen ist durch das Umschalten in einen Rückstellzustand des genannten Flip-Flops (7), nachdem der 8-Bit-Zähler das Zählende erreicht hat, wobei letzterer den Warteschlangenstatus-Folgezähler taktet, dessen Ausgänge den Puffer-RAM adressieren, um Warteschlangenzustände zu speichern, welche, nachdem sie durch den Mikrocomputer gelesen wurden, durch letzteren zu seinen Busspeichern transferiert wird, wobei die ganze Schaltung für einen neuen Uebertragungs-Empfangs-Zyklus eingestellt wird.

5. Schaltungsanordnung gemäss einem der Ansprüche 1 1 bis 4, dadurch gekennzeichnet, dass anstelle eines Mikrocomputers eine verdrahtete logische Folgeschaltung verwendet wird.

6. Schaltungsanordnung gemäss Anspruch 5, dadurch gekennzeichnet, dass der genannte Mikrocomputer einen Algorithmus aufweist, um die Warteschlangenzustände für den Zugriff zum Netz zu steuern.

7. Schaltungsanordnung gemäss Anspruch 6, dadurch gekennzeichnet, dass der genannte Algorithmus die schliessliche Verbindung jedes Endgerätes mit andern faseroptischen Sternnetzen ermöglicht.

## Revendications

1. Circuit pour la mise en oeuvre d'un protocole d'accès pour l'échange en série d'informations numériques entre terminaux interconnectés au moyen d'un réseau en étoile, chaque terminal étant constitué d'un micro-ordinateur (1) fournissant une position d'attente et un message à renvoyer au réseau en étoile, des moyens d'émission (9, 10) pour émettre ladite position d'attente et ledit message à destination du réseau en étoile, des moyens de réception (11, 12) pour les informations reçues du réseau en étoile, une première mémoire (2) pour enregistrer les informations reçues y compris les positions d'attente et les messages, ledit micro-ordinateur (1) lisant les positions d'attente dans ladite première mémoire (2) et lançant l'émission d'un message à destination du réseau en étoile en fonction desdites positions d'attente reçues et ledit micro-ordinateur (1) envoyant ladite position d'attente qui lui est propre à un moment convenable au dit réseau en étoile, caractérisé par le fait que ce circuit inclut aussi une deuxième mémoire (3) pour enregistrer les adresses de tous les terminaux, des moyens de mesure de distance (4) travaillant en fonction du contenu de ladite deuxième mémoire (3) et mesurant la distance entre le terminal et le centre du réseau en étoile, un moyen de retarder l'émission de sa propre position d'attente (6) en fonction de ladite distance mesurée pour déterminer un temps de retard entre la réception d'un message pilote et l'émission de sa dite position d'attente, de manière à lancer cette émission de telle façon que sa propre position d'attente soit transmise dans le cadre d'une séquence ininterrompue des positions d'attente de tous les terminaux.

2. Circuit conforme à la revendication 1, caractérisé par le fait que les moyens de mesure de distance comprennent un compteur (4) comptant les impulsions d'horloge entre l'émission d'un signal de mesure de distance à destination du centre du réseau en étoile et la réception du même message renvoyé à tous les terminaux par le centre de l'étoile.

3. Circuit conforme à la revendication 2, caractérisé par le fait que chaque terminal envoie un signal de mesure de distance dans une phase d'initialisation, dans un ordre déterminé par les adresses des terminaux enregistrées dans ladite deuxième mémoire (3).

4. Circuit conforme à la revendication 1 pour la mise en oeuvre d'un protocole d'accès pour l'échange en série d'informations numériques entre terminaux interconnectés au moyen d'un réseau à fibres optiques en étoile, caractérisé par le fait qu'il comprend un micro-ordinateur doté d'une mémoire vive (RAM) (2) pour enregistrer les positions d'attente et les messages, ainsi que d'une mémoire morte (ROM) (3) pour les adresses physiques de tous les terminaux, lequel micro-ordinateur commande, au départ, un dispositif de mesure de distance (4) pour mesurer la distance entre le centre de l'étoile et chaque terminal, en activant les oscillateurs de celui-ci, en commençant par le plus proche du centre, et en autorisant un compteur de position d'attente (6), dont l'impulsion de fin de comptage commande une bascule (7) qui, à son tour, valide la synchronisation d'un compteur 8 bits, d'un registre à décalage convertisseur parallèle-série (9) et d'un codeur NRZ-Manchester (10) pour l'émission, laquelle est interrompue par la remise à zéro de ladite bascule (7) après la fin de comptage du compteur 8 bits, qui déclenche le compteur de séquence de positions d'attente dont les sorties adressent la RAM tampon pour enregistrer les positions d'attente qui, après avoir été lues par le micro-ordinateur, sont transférées par ce dernier à ses mémoires bus, pour remettre l'ensemble du circuit à l'état nécessaire pour un nouveau cycle d'émission-réception.

5. Circuit conforme à l'une quelconque des revendications 1 à 4, caractérisé par le fait qu'un circuit logique séquentiel câblé est utilisé à la place du micro-ordinateur.

6. Circuit conforme à la revendication 5, caractérisé par le fait que ledit micro-ordinateur a un algorithme de gestion des positions d'attente pour l'accès au réseau.

7. Circuit conforme à la revendication 6, caractérisé par le fait que ledit algorithme permet la connexion éventuelle de chaque terminal à d'autres réseaux à fibres optiques en étoile.
